# EUROPEAN PATENT SPECIFICATION

(11) **EP 1 029 306 B1**
(45) Date of publication and mention of the grant of the patent: **06.03.2002**
(21) Application number: 98951860.0
(22) Date of filing: 22.10.1998
(51) Int. Cl.: G06T 1/00, B25J 9/16, G01S 5/16

(54) **CONTACTLESS MEASURING OF POSITION AND ORIENTATION**
KONTAKTLOSE LAGE- UND ORIENTIERUNGSMESSUNG
DETERMINATION, SANS CONTACT, D'UNE POSITION ET D'UNE ORIENTATION

(30) Priority: 22.10.1997 US 955766
(43) Date of publication of application: 23.08.2000
(73) Proprietor: Trimble AB, 182 11 Danderyd (SE)
(72) Inventor: HERTZMAN, Mikael, S-191 43 Sollentuna (SE); BROWN, Troy, Lane, Crystal Lake, IL 60012 (US)
(74) Representative: Forssell, Gunilla
(86) International application number: SE9801914
(87) International publication number: WO9921134

(56) References cited:
- EP-A1- 0 706 105
- WO-A1-98/54593
- US-A- 4 044 377
- US-A- 5 617 335

## Description

This invention relates to the contactless or touch-free measurement of position and orientation of a tool or accessory, for instance a blade of a road planner, skimmer shovel or the like, in relation to the machine provided with the tool.

Most often indications of the position and orientation of a tool are provided by sensors and encoders on the moving links and rotational parts of the machine which move the tool. However, wear, slippage, complicated installation or the like of the moving parts make the indicated results unreliable and also changeable with the passage of time.

### DESCRIPTION OF RELATED ART

Therefore, a method is desired according to which a non-contacting and reliable measurement of the momentary position, orientation and movements of a tool could be provided.

Document US 56 17 335 discloses a method for contact less or touch free measurement of position and orientation of a tool or accessories by means of image points on image area means.

A known method, disclosed in WO 96/22537, uses two cameras having frame grabbers to measure the distance to, and the speed of, a moving target. The mathematics of the triangulation calculation to provide the distance to a point of the target are analysed, as well as the target speed from consecutive distance measurements. However, it is assumed that the target is moved along a straight line from the cameras and only one point on the target is measured.

A calibration frame for a non-contact measurement systems is disclosed in WO 96/07869. At least two cameras are intended to view an object in order to determine the shape or other geometric properties of the object. A calibration frame having individually controllable light emitting diodes (LED) is arranged in view of the cameras. One LED at the time is switched on and the space co-ordinates for the LED in question is stored with the image co-ordinated data for that LED. This process is repeated for all the LEDs on the frame. Thereafter the computer in the system has all the data required to perform calibration of the measuring system so that measurements can be made. It is to be noted that a stationary system is disclosed in this patent application.

US 440 392 describes a system for point to point measurement of spatial co-ordinates of a touch probe provided with at least three point-sized light sources. The spatial direction to all the light sources of the touch probe are registered simultaneously on at least one 2D (two dimensional) matrix of photosensitive elements. Calculation is made of the spatial direction for each individual light source. Calculation of the spatial co-ordinates for the touch probe is then provided.

US 4,396,945 describes a method of determining the position and orientation of an object in space by use of two cameras which are tamable by servo control to be directed towards the object and record images light sources on the object. The intersection of the lines in space from the cameras towards the object is used to determine the position of each light source in space.

US 4,044,377 describes a target locator to measure the vertical and longitudinal distance from an industrial robot are by means of a closed circuit TV camera with a fixed focus lens. The robot arm is provided with a row of alternate black and white squares. This pattern is identified by the appearance of a burst of pulses in the video output during a horizontal scan across the uniform pattern. The vertical displacement of the target pattern is obtained by averaging the vertical deflection voltages, when the pattern is first acquired by a horizontal scan and when the pattern is just lost. The longitudinal distance to the target is obtained from the pulse repetition frequency from the horizontal scan across the pattern on the camera display.

US 4,764,668 describes a system for performing a safe docking procedure in the clean space. Two pairs of bar codes are positioned along each one of two orthogonal lines going across an opening to a space ship. The position of the space ship and the orientation of it is determined by aid of the bar codes.

### OBJECTS OF THE INVENTION

One object of the invention is to provide a method and system to make a reliable and exact measurement of the momentary position and orientation of a tool or accessory in relation to the body of a machine provided with the tool.

Another object of the invention is to provide a method and a system to make a contactless measurement of a tool or accessory in relation to the body of a machine.

Yet another object of the invention is to provide a method and a system to make exact contactless measurement of the momentary position and orientation of a tool or accessory provided in a dirty and dirtying environment in relation to the body of the machine.

Still another object of the invention is to provide a method and a system which is easily installed to make reliable measurement of the momentary position and orientation of a tool or accessory in relation to the body of a machine.

Yet another object of the invention is to provide a method and a system to make a contactless measurement of a tool or accessory in relation to the body of a machine at short intervals in order to indicate the momentary speed and acceleration and the direction of them for the tool or accessory.

### THE INVENTION

These objects are achieved by a method having the features in claim 1, and a device for performing the method is disclosed in claim 11. Further features and improvements of the invention, are disclosed in the dependent claims.

The invention relates to the technical field of contactless or touch-free measurement of a tool or accessories by means of an imaging area means and processing means performing calculation indicating the position and/or orientation of the tool making use of image points on the imaging area means, based on the image points having predetermined mutual positions provided on the tool, imaged onto the imaging area means, and optics presenting the image points on the tool on the imaging area means, the image points being at least three visible within the field of view of the imaging area means and at least one being distinctly identifiable.

The invention is characterized by, in order to measure the position and/or orientation of the tool, providing a number of measuring elements on the tool, each measuring element having a size large enough for making a reconstruction of its form and calculation of at least one image point on the tool related to the measuring element even though a part of it happens to be obscured by some obscuring object, for example dust.

Each marker has a two-dimensional shape and its point of balance, i.e. the centre-of-gravity of a disk having the same design and a uniform thickness, is detected and is used as its measuring point. Each measuring object could be derivable as a point of a marker positioned on the tool surface. Most of the markers could have the same shape, for instance circular, and at least one of the markers could have a shape different from the others, for instance a square, clearly distinguishable in the imaging areas, each said differently shaped marker having a predetermined known position on the tool and providing a reference point for determine shift position. The calculated consecutive positions in space of at least one of the differently shaped markers could be used as the basis for calculating the shift of the tool.

Preferably at least some of the measuring objects, called lined measuring objects, are positioned on at least one row; and that for each row at least one line in space joining through the lined measuring objects for the row in question is determined. Several measuring objects are preferably present along each row. Calculation of at least one line per row is preferably made using at least three of them, but preferably several, on each image area having known mutual distances on the tool in order to determine the equation of the line and the positions of the measuring objects.

Using the modern computers nowadays having a great computing capacity the markers can be positioned also in an arbitrary design, but the best result will be provided if the markers are placed along lines extending from one short end side of the tool to the other. Thereby, each line can be viewed from each imaging area. Preferably, the rows are parallel to each other, because then the calculations of the rotations in different directions of the tool are easy to make and be programmed on a computer. However, it is also possible to have two lines crossing each other, for instance going diagonally over the tool and crossing each other in the middle between the short end sides, or the like.

Consecutive measurements of the markers could be provided, each measurement resulting in calculation of the tool 3D position, and further calculations are performed to calculate the 3D movements of tool from calculation to calculation and thereby to calculate at least one type of movement, such as shift, rotation etc.

At least two rows of markers are preferably provided on the tool, particularly when the tool can be moved both in all cartesian directions and turned around all the cartesian axes. A line in space is then calculated for each of the rows. Roll of the tool is derived by combining the information from the calculated 3D lines from at least two of the rows. The two rows can also be used to increase accuracy and extend the range of the coarse shift position determination. If the lines are parallel on the tool and the images of them are shown on a display, the operator of the working machine will have an intuitive sense of the orientation of the tool by looking at the display, since the lines will be angled to each other in relation to the rotafion around a vertical axis. If the calculated points of balance also are shown along the lines then the operator will also have an intuitive sense of the roll of the tool, since the distance between the points on the lines will then be different in dependence of the distance to the tool at the viewed position.

The present invention will be carried out according to attached independent claims 1 and 3.

### SHORT DESCRIPTION OF THE FIGURES

The invention will now be described in more detail with reference to the accompanying drawings, in which
- FIG 1: illustrates schematically a first embodiment of a device according to the invention;
- FIGs 2A to 2F: illustrate different kinds of code patterns to be provided onto the tool.
- FIG 3: illustrates schematically a second embodiment of a device according to the invention; and
- FIG 4: illustrates schematically a third embodiment of a device according to the invention.

### DETAILED DESCRIPTION OF EMBODIMENTS

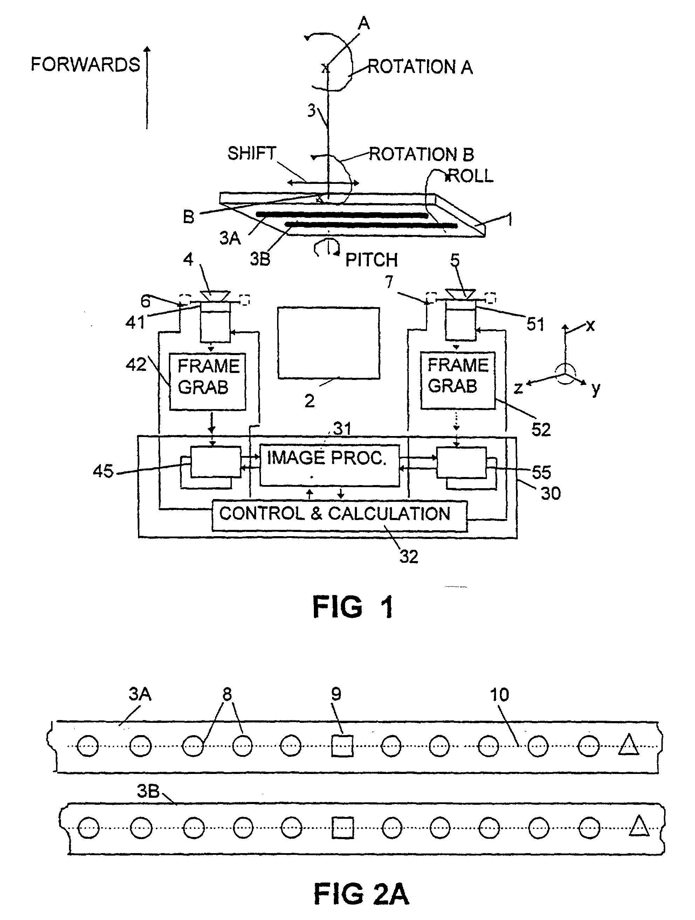

Referring to FIG 1, a tool 1, illustrated as a road grader blade, is movable in relation to a machine, here illustrated as a control cabin 2 for the operator (not shown). The tool 1 is pivotably linked via, for example, a ball and socket joint to a bar 3, which in turn is pivotably linked to the machine. Thus, the tool 1 is pivotal around both the rotation points A and B at the end of the bar 3. The position (shift and height) of the tool and its orientation are to be determined.

At least one imaging area 4 (and 5), here represented by video cameras, are positioned in the vicinity of the control cabin 2. Preferably, two separate video cameras 4 and 5 are provided and positioned on each side of the cabin 2. The reason is that the tool 1 can be shifted so far that it comes outside the field of view of one of the cameras. Thus the problem which is solved by having two cameras is how to get a view of the tool all the time during a working operation.

According to the invention measuring points are provided on the blade. The points are preferably markers or code objects having sizes and shapes which are clearly detectable when making image processing which will be described later on in the description. It is to be noted that the sizes of the markers must be so large that the shapes of them can be restored by the calculation of the image on each imaging area even though some dirt obscure a part of it. An image of a marker can also be obscured by some obscuring object positioned between the marker and the camera in question.

The markers are appropriately provided on at least one, preferably two code strips 3A, 3B adhered to the blade and are facing towards the imaging area or areas 4, 5, henceforth called cameras. Each strip is provided with the markers or code objects easily recognisable and distinguishable by the cameras.

Each of these code objects, below called markers, serve as measuring objects. However, measuring objects could also be easily distinguishable points on one and the same marker. If for instance a marker is a triangle, each apex of it could be used as a measuring object. The form of the marker is still reconstructable by the computation so that the distinguishable points can be reconstructed even if one of them is obscured by dirt. In a case like this it is the distinguishable points which are computed and not the point of balance. An unambiguous shift position can be obtained using markers of different shape and constellations.

If at least three or four points on a line in space (here three markers on one of the strips) having known mutual distances are recorded on an imaging area the equation of the line and the position of the points can be determined. If more than three points on a line (markers) are used, then a least square method could be used in order to determine the desired parameters in a more secure and exact way than with only three points, thus creating an over-determined system. An over-determinable system is preferred in a dirty and dirtying environment.

When two or more lines of markers are used, then further conditions could be used in order to enhance the estimations and to determine the position and orientation in space of the imaged object in a three-dimensional system. These mathematical conditions are well known for the person skilled in the art and are therefore not described in detail. They are described for instance in the textbook by Haralick and Shapiro "Computer and Robot Vision", vol II. The invention is a way to make practical use of such conditions in a contactless measurement of a tool. The position and orientation in space could also be provided with markers or code objects spread in a predetermined way over the surface. However, use of lines lead to equations easy to solve, particularly if they are parallel, and are therefore preferable. Using the mathematical conditions desribed in the textbook above it could be possible to make three-dimensional determinations having only four or five measuring objects on the tool having known mutual positions. As mentioned above, several measuring objects are preferably used in order to create an over-determined system.

Support for the roll-determination is also provided by using two or more lines of markers on the strips 3A and 3B. As mentioned above, the code on each strip should preferably have some redundancy, i.e. more markers to measure than what is strictly needed for computations to calculate the position of a line in a 3D-co-ordinate system, since it is not possible to avoid that at least some of the markers and/or code objects will become very dirty during operation. An active lighting unit 6, 7 can be provided in order to enhance the visibility of the markers on the coded strips.

The redundancy can be provided by having the code pattern doubled or otherwise multiplied on each strip, as illustrated in the FIGs 2A to 2C. The readability of the display areas can be checked by comparing the different parts of the image of the strips. If they are different as regards the pattern configuration, apart from size and inclination, then an indication is made to alarm the operator that the code is on the point of being too dirty. It is also possible and preferred to have a stored image of the patterns and to compare the pattern on the strip with the stored patterns in order to detect dirt on the code strips.

The displacements of the tool 1 can be large, particularly if the pivoting points are spaced a long distance apart from each other. Therefore, the distance from the cabin 2, and hence the cameras 4, 5, to the tool blade 1, or at least a part of it, can vary considerably, for instance 2 to 4 m. Shift and rotation around the point A can also cause the tool blade 1 to be moved out of the viewing imaging area of one of the cameras 4 or 5. Therefore, at least two cameras are preferably provided. The cameras are preferably provided at fixed locations and with fixed orientation on the wording machine in order to have as few movable parts as possible. However, if the tool is provided on for instance a bulldoozer, having two degrees of freedom with high lifts then the camera(s) are preferably turnable around a substantially horizontal axis in order not to loose sight of the markers, i.e. the markers must not be moved up or down out of sight of the imaging area(s).

A bulldoozer blade often has only a limited moving pattern and can often not be turned in every possible direction. If the number of degrees of freedom is limited the number of markers could be reduced and the calculation be simplified.

Since the instantaneous position of the blade is to be determined, a measuring frequency of between 1 to 50 Hz, preferably between 10 to 50 Hz, is desired. This means that the images of the coded strips are provided at the measuring frequency.

However, it is possible to determine shift position, rotation and roll at a lower frequency, i.e. making the more complicated calculations at greater intervals.

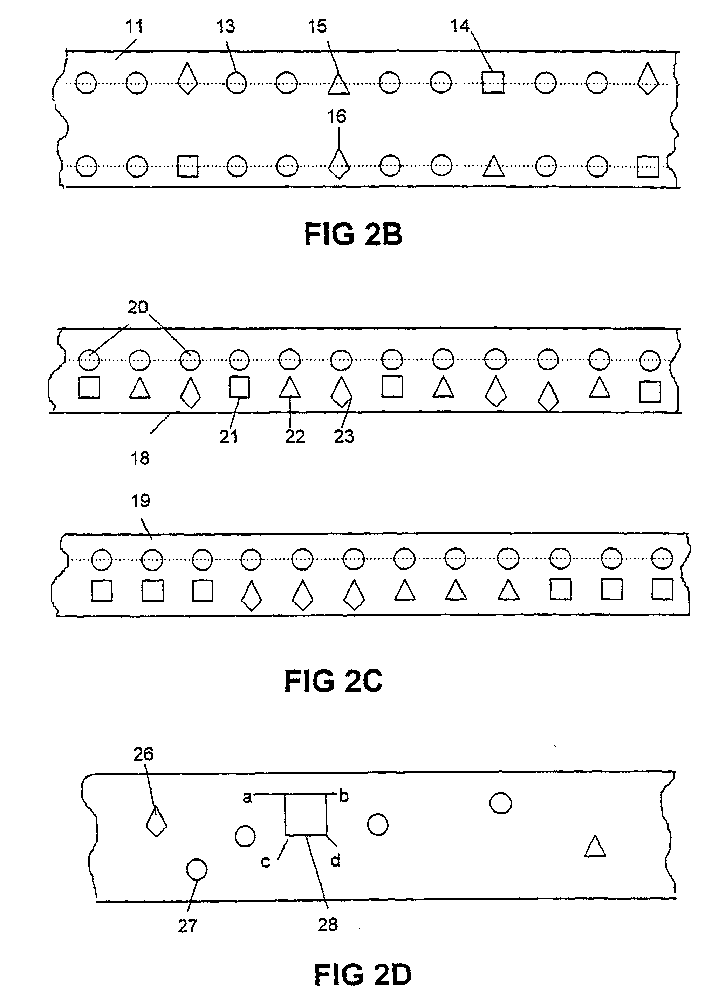

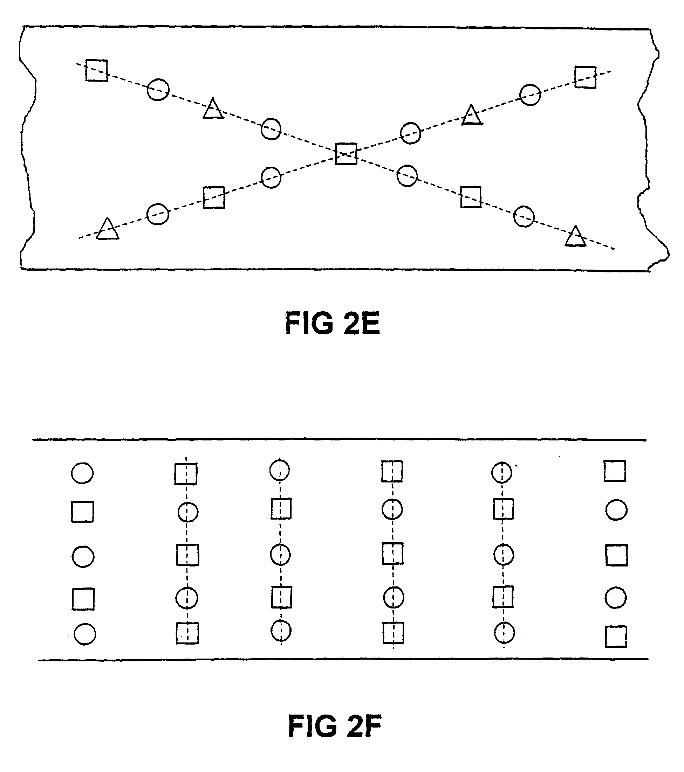

Different kinds of code design are illustrated on FIGs 2A, 2B, 2C, 2D, 2E, 2F.

FIG 2A shows two code strips, one above the other and both provided with circular markers 8 at precise mutual spaces. The size and the distance to them from each of the cameras 4 and 5 are adapted such that the circular markers cover such a number of pixels in the camera image, and that such a number of them are shown in the image, that the position and orientation of a line going through them can be determined with an acceptable accuracy. As an example, a suitable diameter or diagonal size is 3 cm and a suitable distance apart is 6 cm, the pixel density is such that each object covers at least 100 pixels, and the image size is chosen such that at least ten objects are shown in the image, at least when the blade 1 is parallel to the cabin 2.

FIG 2A also illustrates that some of the markers could have another shape than the others. For example each fifth marker could be a square, as illustrated at 9, a triangle or the like instead of a circle 8. It is to be noted that the point of balance of each marker preferably should be placed on the same line 10 as the point of balance of the other objects. Having markers of different shapes makes it possible to exactly identify each marker on the blade in the image of each camera and hence the position of each of them.

FIG 2B illustrates that the two parallel codes could have different shapes. In this way the positions of differently shaped markers could be uniquely determined by comparing the marker shapes one above the other in the two rows. It also illustrates that the rows of code markers could be provided on the same strip 11. In this embodiment each row has circles 13 and three differently shaped markers placed as the fifth object. These objects are a square 14, a triangle 15, a diamond 16 etc. However, the codes are differently ordered and permuted so that different kinds of the fifth element are placed one above the other on each position for a fifth element. In this way, using the sizes of the code elements given as an example above, it is possible to get nine unique half-meter positions, and hence a good resolution could be provided for a length of the tool 1 up to at least 5 m. This code has the advantage that all distances between the markers (i.e. their points of balance) are equal, even though they are differently shaped.

It is to be noted that the normal marker does not have to be a circle but another kind of object, for instance a polygon or the like. However, the markers preferably have a symmetric shape.

FIG 2C illustrates that extra symbols could be provided at the side of the circular objects and shows two parallel strips 18 and 19 where each circle 20 has another kind of symbolic object below, such as in cyclic order a square 21, a triangle 22, a diamond 23 for the first three groups in the upper row, and groups of three symbolic objects of the same kind in cyclic order in the lower row. The reason for this is to create a uniquely determinable position for the markers when they are recorded. The forth group in the upper row has the symbolic object permuted in order to create a symbol order in which each combination of two symbol combinations of the upper and lower rows at the side of each other have different combinations. It is also possible to have symbols placed more sparcely in relation to the circular objects, for instance at each third such that the first three groups of symbolic objects will be enough for the marker rows.

The reason to have only circular markers above (or beneath) the symbolic objects or markers is that it is easier to determine the point of balance in a circle (or the same kind of objects) than in differently shaped object and also that the identification of the symbolic objects can be made in a simple way. They do not even need to have their points of balance positioned on the same line, because it is the circular markers which are the markers from which the lines in space should be derived. The differently shaped symbol markers only serve a position identification purpose.

FIG 2D illustrates that the markers or measuring objects need not be provided on lines and thus could be predetermined but arbitrary spread over the tool surface. The computers are so powerful nowadays that all the needed information can be derived without placing the markers in an orderly way. Measuring could be provided to the tool onto known predetermined positions at the manufacturing. The positions of the markers on the image areas are then stored. The processor making the calculations will be provided with a program directly calculating and presenting the position, orientation and moving direction of the tool.

The markers 26, 27, 28 need not have different shapes even though this is to be preferred. They need not either have the same size as illustrated at 28. Their different positions could be derivable from the particular pattern in which they are arranged on the tool. It is also illustrated that one marker could provide several measuring objects, such as the comers a, b, c, d of the square marker 28. It is to be noted that the corners could be restored even if all of them should happen to be obscured.

FIG 2E illustrates that markers can be placed along at least two lines crossing each other, and FIG 2F that markers can be placed along vertical lines. The lines are illustrated to be placed at such short distances that the cameras 4, 5 can have least one of those lines in their field of view.

The markers are preferably designed in a retro-reflective foil material. The background could be black and dull. This will minimise the disturbance from the light in the environment and also minimise the need of power supply for at least one active lighting unit 6, 7.

It is to be noted that the measuring device must be able to work perfectly in spite of varying environment light. Thus, the lighting unit or units 6, 7 have to provide a light strong enough to give a reflection from the markers above the level of the ambient light reflected by the tool blade 1 and its code strips. Instead of having reflective markers lights, such as light emitting diodes (LED), could be positioned on the tool blade and switched on during operation. However, this is not a preferred solution, even if it is possible, because of the vibration of the tool blade which makes the lighting circuitry sensitive and unreliable.

The lighting units 6, 7 could be positioned on the cabin 2. However, a preferred position, shown in Fig. 1, is near to the camera optics, for instance a fitting 6, 7 comprising a number of light diodes placed around each camera 4 and 5, respectively.

Each camera 4 and 5 could be provided with an array (matrix) of CCD-detectors. Each camera could also be provided with a spectral filter 41, 51, respectively, transmitting at least the same wavelengths as the lighting units 6 and 7 in order to minimise the influence of ambient light and to enhance the signal-to-noise ratio. The bandwidth of the filter 41, 51 is rather narrow, for example about 50 nm. An interference filter having a transmittance around the wavelength of the lighting units 6 and 7 could then be used. Also, the bandwidth of the lighting units 6, 7 and the filters 41, 51 is preferably within a wavelength range in which the solar light levels are rather low. For instance, the lighting units could comprise light diodes having a wavelength of 950 nm, i.e. within the near infrared range.

Each camera or two or more cameras in combination could be connected to at least one so called framegrabber 42, 52, respectively, for momentarily recording the images. The outputs from the framegrabbers are digitised representations of the images. The output from each framegrabber is stored at least momentarily in a store 45 or 55, respectively, in a calculating unit 30 for image processing, control and calculation. Each store could have a capacity to store more than one image at the time in order to ease the calculations, particularly since the movements of the line(s) in space should be derived.

The information in the images of interest to be used are the positions and shapes of the markers. Thus, the image parts comprising these objects are segmented out from the background, i.e. the background is discriminated. This is done by the image processor 30, 31. The respective points of balance of the markers are calculated. The background discrimination level is adapted between the exposures by striving to have the same amount of objects in the images for different exposures and to check that the shape of the markers is the right one (for instance circular or oval). This criterion is a minimisation of the shape factor.

In the embodiment shown in FIG 1, by processing of the images from the cameras the computer calculates the orientation of the space lines going through the lines of markers, for example provided on code strips 2 and 3.

Since markers having different shapes than the others are used the positions of individual markers could be derived in relation to the tool blade 1. From the calculated momentary surface positions of the tooL surface rotation, pitch and roll of the blade are then calculated. The movement speed in different directions and rotations could be derived and hence tool positions can be predicted at least a short time in advance.

The image recordings and the calculations are performed at short intervals. The unit 30 simultaneously switches on the lighting units 6 and 7 and the electronic shutters (not shown) of the cameras for a suitable period of time, for instance in the order of 1/1000 s, as illustrated by the block 32. The image processing starts directly, and a new image recording is done. It is possible to have more than one processing circuits working in parallel but time shifted in order to be able to have a close repetition frequency. Preferably the internal circuits in the cameras, for instance the integration time control and AGC, controls the exposure to be optimum.

In order to calculate the three-dimensional information derivable from the image data. the computer program first transmits the pre-processed data to a calibrated co-ordinate system. Checkpoints could then be provided in stored tables. It is also possible to let the computer program make a homogenous matrix multiplication. An over-determined equation system is used for calculating the equations for the lines and the points of each line belonging to each individual code strip.

The equations are based on mere geometrical considerations known for the person skilled in the art and are therefore not described in detail. Height, inclination and rotation are derived directly from the results of the calculations. Roll is derived by combining information from two rows of markers. Shift is determined by interpretation of the code such that a code point having a known position is related to its position on the blade. Such markers are thus provided on each code strip as described above.

The measures described above only provide the movements of the blade 1 in relation to the cabin 2. The speed, actual position and orientation of the vehicle having the tool blade 1 is measured in another conventional way.

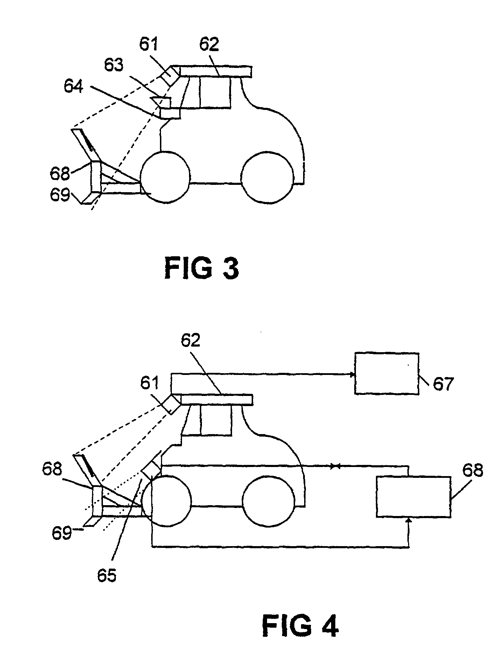

However, in accordance with a second embodiment of the invention, shown in FIG 3, blade speed in relation to the ground is also derivable, at least when the blade is in contact with the ground. This embodiment also illustrate that it is possible to have only one camera 61, which then is placed on the front of the cabin 62. The camera 61 can have a field of view such that not only the blade but also the ground are recorded on its image plane, or alternatively have a part of its field of view by a divisional optics 63 directed towards the lower part of the tool. Preferably, the divisional optics is fixed and calibrated at the installation.

Alternatively and preferably, as shown in FIG 4, besides the camera 61 a separate camera 65 is provided on the cabine 62 and directed such that both the blade and the ground are viewed and recorded. The image processing in a processing device 66 of the recorded image of the ground and at least a part of the ground demands a more powerful computation than the computation in the processing device 67 for the markers on the tool blade 68 using for instance correlation techniques.

Since the movements of the tool blade 1 in relation to the cabin 2 are monitored and calculated it is possible to servo control the direction of the divisional optics 63 of the divisional optics through a direction controllable mounting device 64 onto which the divisional optics are mounted, or the extra cainera 65 from the processing device 66 such that the blade edge always lies at a pre-determined position in the part of the image or the image, respectively, showing the blade edge 69 together with the ground. The servo control feature is, however, expensive and therefore it is preferred to have the divisional optics or the extra camera in a fixed position.

While the invention has been described with reference to specific embodiments, it will be understood by those skilled in the art that various changes may be made and equivalents may be substituted for elements thereof and different features described for one embodiment could be adequate also in the other embodiments without departing from the invention as it is stated in the claims on file.

For example at least one object position on the tool could be calculated making use of the image of the measuring objects on the image area(s) and be used to derive the 3D position of the tool and its 3D movement.

## Claims

1. A method for contact-less or touch-free measurement of position and orientation of a tool or accessories by means of image points on at least one imaging area means (4,5),
• said image points on the imaging area means being based on markers (8, 9; 13 to 16; 20 to 23) provided on said tool and having predetemined mutual positions,
• said image area means comprising optic means to convert said markers on said tool into said image points on the imaging area means, and
• and wherein at least three of said markers on said tool being visible within the field of view of said imaging area means and at least being distinctly identifiable, moreover
• in order to measure the position and/or orientation of said tool, said markers (8, 9; 13 to 16; 20 to 23) having a size large enough and a shape such that said corresponding image points on said image area means can be processed in order to restore them even though a part of said markers is obscured by some obscuring object,
**characterized by**
providing at least two rows of said markers on the same plane of said tool, each of said rows including at least three markers; and wherein said at least two rows of markers being parallel.

2. Method according to claim 1, **characterized by**
determining for each of said rows at least one line in a 3Dimensional space going through said alined markers for the row in question .

3. Method according to claim 1 or 2, **characterized by**
providing consecutive measurements of said markers, each measurement resulting in calculation of the actual position and/or orientation of said tool in a 3D space
performing further calculations of the position and/or orientation of said tool in a 3D space during movement of said tool to calculate the 3D movements of said tool in a 3D space; and
calculating at least one type of movement of the tool from said calculations made during movement of the tool, such as shift, rotation etc.

4. Method according to any of the preceding claims, **characterized by**
• providing the same shape to most of the markers;
• giving at least one of the markers a shape different from the others, clearly distinguishable in said imaging area means;
• giving each said differently shaped marker a predetermined known position on said tool and determining a reference point for determining shift position; and
• calculating a point or points on each marker to be used as the measuring point or points representing the marker.

5. Method according to claim 4, **characterized in that**, in order to have a uniquely determined position for each differently shaped marker, giving the differently shaped markers on different rows a different order and/or different configurations.

6. Method according to any of the preceding claims, **characterized by** detecting for each marker its point of balance to be used as a point representing the measured marker.

7. Method according to claim 1, **characterized in that** the parallel rows of markers being either horizontal or vertical.

8. Method according to any of claims 1, 3 to 6, **characterized by** deriving roll of the tool by combining the information regarding at least two of the rows.

9. Device for contact-less or touch-free measurement position and/or orientation of a tool or accessories by means of image points on imaging area means (4,5), said image points on said image area means being based on markers provided on said tool and having predetermined mutual positions; comprising
• processing means (30) adapted for making calculations based on said markers on said tool, imaged onto said imaging area means,
• optical means adapted (41, 42;51;52) to convert said markers on said tool into said image points on said image area means, and
• said processing means (30) further comprising means adapted to calculate the actual position and/or orientation along at least one axis of said tool making use of said image points,
• each of said markers comprising at least one measuring point, and at least one of them being identifiable; each of said markers being position and/or orientation indicating means having a size large enough and a shape such that said processing means (30) can process them in order to restore them even though a part of said markers is obscured by some obscuring objects
**characterized by**
• at least two rows of said markers (8,9;13-16,20-23;26-28) provided on the same plane of said tool, each of said rows including at least three markers; and wherein
• said at least two rows of markers being provided on the same plane of said tool and being parallel.

10. Device according to claim 9, **characterised in that**
• for each of such row, said processing means (30) further comprising means adapted to determine at least one line in a 3D space going through said row.

11. Device according to claim 9 or 10, **characterized in that**
• said processing means (30) further comprising means adapted to make calculations of a line through each row and/or the position of at least one marker on each row.

12. Device according to claim 11; **characterized in that** said parallel rows are either horizontally or vertically.

13. Device according to claim 11, **characterized in that** said rows of markers extend along a line going from one end side of the tool to the other..

14. Device according to any of the claims 9 to 13, **characterized in that**
• said processing means (30) further comprising means adapted to make consecutive measurements of said markers, each measurement resulting in the calculation of at least a line in a 3D space on the tool surface, and
• the processing means (30) further comprising means adapted to calculate movements of said line in 3D space on the tool and thereby to calculate at least one type of movement of the tool, such as shift, rotation etc.

15. Device according to any of the claims 9 to 14, **characterized in that**
• most of the markers (8;13;20) on the tool have the same shape, and that
• at least one marker (9;14 to 16) is provided having a shape different from the others, clearly distinguishable in said imaging area(s),
• each said differently shaped marker having a predetermined known position on said tool and in relation to a predetermined constellation of the others markers.

16. Device according to claim 15, **characterized in that**, in order to have a uniquely determinable position for each differently shaped marker, said differently shaped markers related to different rows having a different order and/or different configurations.

17. Device according to any of the claims 9 to 16, **characterized in that** each marker provided in a row of markers used for the measurement is a part of a marker having a two-dimensional shape.

18. Device according to any of the claims 9 to 16, **characterized in that** the processing means (30) further comprising means to detect the point of balance in a marker and further comprising means to use it as one of the measuring points.

19. Device according to any of the claims 9 to 18, **characterized in that** the processing means (30) further comprising means to calculate shift of the tool by detecting different spatial positions of the differently shaped marker or markers in consecutively made measurements.

20. Device according to any of the claims 9 to 19 **characterized in that** the markers (8,9;13-15;20-23) are reflective and provided on a dull background, and further comprising lighting means (6,7) to illuminate said markers at least during the imaging of the imaging areas (4,5).

## Patentansprüche

1. Verfahren zur kontaktlosen und berührungsfreien Messung der Position und Orientation eines Werkzeugs oder von Zubehörteilen mittels Bildpunkten auf mindestens einem Abbildungsmittel (4, 5), wobei
• die genannten Bildpunkte auf dem Abbildungsmittel auf Markierern (8, 9; 13 bis 16; 20 bis 23) beruhen, die auf dem genannten Werkzeug vorgesehen sind und vorbestimmte gegenseitige Positionen aufweisen,
• das genannte Abbildungsmittel optische Mittel umfasst, um die genannten Markierer auf dem genannten Werkzeug in die genannten Bildpunkte auf dem Abbildungsmittel zu überführen,
• und worin mindestens drei der genannten Markierer auf dem genannten Werkzeug im Sichtfeld des genannten Abbildungsmittels sichtbar und zumindest unterscheidbar identifizierbar sind,
• um ausserdem die Position und/oder Orientation von genanntem Werkzeug zu vermessen, wobei die genannten Markierer (8, 9; 13 bis 16; 20 bis 23) eine genügend große Größe und eine solche Form aufweisen, dass die genannten entsprechenden Bildpunkte auf genanntem Abbildungsmittel verarbeitet werden können, um sie wiederzuerstellen, obwohl sogar ein Teil der genannten Markierer durch ein etwaiges verdunkelndes Objekt verdunkelt ist,
**dadurch gekennzeichnet, dass**
mindestens 2 Reihen der genannten Markierer auf der gleichen Ebene des genannten Werkzeugs vorgesehen sind, wobei jede der genannten Reihen mindestens drei Markierer einschließt, und worin die genannten mindestens zwei Reihen von Markierern parallel verlaufen.

2. Verfahren gemäß Anspruch 1,
**dadurch gekennzeichnet, dass**
für jede der genannten Reihen mindestens eine Linie in einem dreidimensionalen Raum bestimmt wird, die durch die genannten in Linie angeordneten Markierer für die betreffende Reihe verläuft.

3. Verfahren gemäß Anspruch 1 oder 2,
**dadurch gekennzeichnet, dass**
aufeinander folgende Messungen der genannten Markierer vorgesehen sind, wobei jede Messung zur Berechnung der tatsächlichen Position und/oder Orientation des genannten Werkzeugs in einem 3D-Raum führt,
weitere Berechnungen der Position und/oder Orientation des genannten Werkzeugs in einem 3D-Raum während der Bewegung des genannten Werkzeugs durchgeführt werden, um die 3D-Bewegungen des genannten Werkzeugs in einem 3D-Raum zu berechnen, und dass
mindestens ein Typ der Bewegung des Werkzeugs aus den genannten, während der Bewegung des Werkzeugs, wie Verschiebung, Rotation, usw., durchgeführten Berechnungen berechnet wird.

4. Verfahren gemäß einem der vorhergehenden Ansprüche,
**dadurch gekennzeichnet, dass**
• die gleiche Form für die meisten der Markierer vorgesehen ist,
• mindestens einem der Markierer eine sich von den weiteren unterscheidende Form gegeben wird, die klar unterscheidbar im genannten Abbildungsmittel ist,
• jedem genannten unterschiedlich geformten Markierer eine vorbestimmte bekannte Position auf dem genannten Werkzeug gegeben und ein Bezugspunkt zur Bestimmung der Verschiebungsposition bestimmt werden, und dass
• ein Punkt oder Punkte auf jedem Markierer berechnet werden, um als der oder die Messpunkte eingesetzt zu werden, die den Markierer darstellen.

5. Verfahren gemäß Anspruch 4,
**dadurch gekennzeichnet, dass**,
um eine einzigartig bestimmte Position für jeden unterschiedlich geformten Markierer aufzuweisen, die unterschiedlich geformten Markierer auf unterschiedlichen Reihen eine unterschiedliche Ordnung und/oder unterschiedliche Konfigurationen ergeben.

6. Verfahren gmeäß einem der vorhergehenden Ansprüche,
**dadurch gekennzeichnet, dass**
für jeden Markierer sein Gleichgewichtspunkt nachgewiesen und erfasst wird, um als Punkt eingesetzt zu werden, der den vermessenen Markierer darstellt.

7. Verfahren gemäß Anspruch 1,
**dadurch gekennzeichnet, dass**
die parallelen Reihen von Markierern entweder horizontal oder vertikal verlaufen.

8. Verfahren gemäß einem der Ansprüche 1 und 3 bis 6,
**dadurch gekennzeichnet, dass**
eine Drehung des Werkzeugs durch Kombinieren der Information bezüglich mindestens zwei der Reihen abgeleitet wird.

9. Vorrichtung zur kontaktlosen oder berührungsfreien Messung der Position und/oder Orientation eines Werkzeugs oder von Zubehörteilen mittels Bildpunkten auf Abbildungsmitteln (4, 5), wobei die genannten Bildpunkte auf den genannten Abbildungsmitteln auf Markierern beruhen, die auf genanntem Werkzeug vorgesehen sind und vorbestimmte gegenseitige Positionen aufweisen, umfassend
• Verarbeitungsmittel (30), die zur Durchführung von Berechnungen angepasst sind, bezogen auf die genannten Markierer auf dem genannten Werkzeug, das auf dem genannten Abbildungsmittel abgebildet wird,
• optische Mittel (41, 42; 51, 52), die angepasst snd, um die genannten Markierer auf genanntem Werkzeug in genannte Bildpunkte auf genanntem Abbildungsmittel zu überführen, und
• genannte Verarbeitungsmittel (30), die ferner Mittel umfassen, die angepasst sind, um die tatsächliche Position und/oder Orientation entlang mindestens einer Achse des genannten Werkzeugs unter Anwendung der genannten Bildpunkte zu berechnen,
• wobei jeder der genannten Markierer mindestens einen Messpunkt umfasst und mindestens einer von ihnen identifizierbar ist, und wobei jeder der genannten Markierer ein Mittel zur Positions- und/oder Orientationsanzeige ist, welches eine genügend große Größe und eine solche Form aufweist, dass das genannte Verarbeitungsmittel (30) diese verarbeiten kann, um sie wiederzuerstellen, obwohl sogar ein Teil der genannten Markierer durch etwaige verdunkelnde Objekte verdunkelt ist,
**dadurch gekennzeichnet, dass**
• mindestens zwei Reihen der genannten Markierer (8, 9; 13 bis 16; 20 bis 23; 26 bis 28) auf der gleichen Ebene des genannten Werkzeugs vorgesehen sind, worin jede der genannten Reihen mindestens drei Markierer einschließt, und worin
• die genannten mindestens zwei Reihen von Markierern auf der gleichen Ebene des genannten Werkzeugs vorgesehen sind und parallel verlaufen.

10. Vorrichtung gemäß Anspruch 9,
**dadurch gekennzeichnet, dass**
• für jede solcher Reihen die genannten Verarbeitungsmittel (30) ferner Mittel umfassen, die angepasst sind, um mindestens eine Linie in einem 3D-Raum zu bestimmen, die durch die genannte Reihe verläuft.

11. Vorrichtung gemäß Anspruch 9 oder 10,
**dadurch gekennzeichnet, dass**
• das genannte Verarbeitungsmittel (30) ferner Mittel umfasst, die angepasst sind, um Berechnungen einer Linie über jede Reihe hinweg und/oder der Position von mindestens einem Markierer auf jeder Reihe durchzuführen.

12. Vorrichtung gemäß Anspruch 11,
**dadurch gekennzeichnet, dass**
die genannten parallelen Reihen entweder horizontal oder vertikal verlaufen.

13. Vorrichtung gemäß Anspruch 11,
**dadurch gekennzeichnet, dass**
sich die genannten Reihen von Markierern entlang einer Linie erstrecken, die von einer Endseite des Werkzeugs zur anderen verläuft.

14. Vorrichtung gemäß einem der Ansprüche 9 bis 13,
**dadurch gekennzeichnet, dass**
• das genannte Verarbeitungsmittel (30) ferner Mitel umfasst, die angepasst sind, aufeinander folgende Messungen der genannten Markierer durchzuführen, woei jede Messung zur Berechnung von mindestens einer Linie in einem 3D-Raum auf der Werkzeugoberfläche führt, und
• die Verarbeitungsmittel (30) ferner Mittel umfassen, die angepasst sind, um Bewegungen der genannten Linie im 3D-Raum auf dem Werkzeug zu berechnen und dadurch mindestens einen Bewegungstyp des Werkzeugs, wie eine Verschiebung, Rotation, usw., zu berechnen.

15. Vorrichtung gemäß einem der Ansprüche 9 bis 14,
**dadurch gekennzeichnet, dass**
• die meisten der Markierer (8; 13; 20) auf dem Werkzeug die gleiche Formgestalt aufweisen, und dass
• mindestens ein Markierer (9; 14 bis 16) mit einer sich von den weiteren unterscheidenden Formgestalt vorgesehen ist, die klar unterscheidbar in der bzw. den genannten Abbildungsflächen ist,
• wobei jeder genannte unterschiedlich geformte Markierer eine vorbestimmte bekannte Position auf genanntem Werkzeug und in Relation zu einer vorbestimmten Konstellation der weiteren Markierer aufweist.

16. Vorrichtung gemäß Anspruch 15,
**dadurch gekennzeichnet, dass**,
um eine einzigartig bestimmbare Position für jeden unterschiedlich geformten Markierer aufzuweisen, die genannten unterschiedlich geformten Markierer, die auf unterschiedliche Reihen bezogen sind, eine unterschiedliche Ordnung und/oder unterschiedliche Konfigurationen aufweisen.

17. Vorrichtung gemäß einem der Ansprüche 9 bis 16,
**dadurch gekennzeichnet, dass**
jeder Markierer, der in einer Reihe von Markierern zur Vermessung vorgesehen ist, ein Teil eines Markierers ist, der eine zweidimensionale Formgestalt aufweist.

18. Vorrichtung gemäß einem der Ansprüche 9 bis 16,
**dadurch gekennzeichnet, dass**
die Verarbeitungsmittel (30) ferner Mittel umfassen, um den Gleichgewichtspunkt in einem Markierer nachzuweisen und zu erfassen, und ferner Mittel umfassen, um sie als einen der Messpunkte einzusetzen.

19. Vorrichtung gemäß einem der Ansprüche 9 bis 18,
**dadurch gekennzeichnet, dass**
die Verarbeitungsmittel (30) ferner Mittel umfassen, um die Verschiebung des Werkzeugs zu berechnen, wobei unterschiedliche räumliche Positionen des oder der unterschiedlich geformten Markierer in aufeinander folgend durchgeführten Vermessungen nachgewiesen und erfasst werden.

20. Vorrichtung gemäß einem der Ansprüche 9 bis 19,
**dadurch gekennzeichnet, dass**
die Markierer (8, 9, 13 bis 15; 20 bis 23) reflektiv und auf einem verschwommenen Hintergrund vorgesehen sind und die Vorrichtung ferner Beleuchtungsmittel (6, 7) umfasst, um die genannten Markierer zumindest während der Abbildung der Abbildungsflächen (4, 5) zu beleuchten.

## Revendications

1. Procédé de mesure sans contact ou sans touche de la position et de l'orientation d'un outil ou d'accessoires au moyen de points d'image sur au moins un moyen de formation de zone d'image (4, 5),
lesdits points d'image sur le moyen de formation de zone d'image étant basés sur des repères (8, 9 ; 13 à 16 ; 20 à 23) prévus sur ledit outil et présentant des positions mutuelles prédéterminées,
ledit moyen de formation de zone d'image comprenant un moyen optique afin de convertir lesdits repères sur ledit outil en lesdits points d'image sur le moyen de formation de zone d'image ; et
dans lequel au moins trois desdits repères sur ledit outil sont visibles à l'intérieur du champ de vision dudit moyen de formation de zone d'image et sont au moins distinctement identifiable,
en outre, dans le but de mesurer la position et/ou l'orientation dudit outil, lesdits repères (8, 9 ; 13 à 16 ; 20 à 23), présentent une taille suffisamment importante et une forme telle que lesdits points d'image correspondants sur ledit moyen de formation de zone d'image peuvent être traités dans le but de les restituer même si une partie desdits repères est masquée par certains objets opaques,
**caractérisé par** l'étape de prévoir au moins deux rangées desdits repères sur le même plan dudit outil, chacune desdites rangées comprenant au moins trois repères ; et dans lequel,
lesdites au moins deux rangées de repères sont parallèles.

2. Procédé selon la revendication 1, **caractérisé par**
la détermination, pour chacune desdites rangées, d'au moins une ligne dans un espace tridimensionnel passant à travers lesdits repères alignés pour la rangée concernée.

3. Procédé selon la revendication 1 ou 2, **caractérisé par**
la réalisation de mesures consécutives desdits repères, chaque mesure conduisant à un calcul de la position et/ou de l'orientation réelles dudit outil dans un espace tridimensionnel ;
la réalisation d'autres calculs sur la position et/ou l'orientation dudit outil dans un espace tridimensionnel au cours du déplacement dudit outil afin de calculer les déplacements tridimensionnels dudit outil dans un espace tridimensionnel ; et
le calcul d'au moins un type de déplacement de foutil à partir desdits calculs réalisés au cours du déplacement de l'outil, tel qu'une translation, une rotation, etc..

4. Procédé selon l'une quelconque des revendications précédentes, **caractérisé par**:
l'étape de prévoir des repères avec la même forme ;
l'affectation, à au moins l'un des repères, d'une forme différente de celle des autres, qui peut être distinguée facilement dans ledit moyen de formation de zone d'image ;
l'affectation de chaque dit repère de forme différente à une position connue prédéterminée sur ledit outil et la détermination d'un point de référence afin de déterminer un décalage de position ; et
le calcul d'un point ou de points sur chaque repère à utiliser comme le point ou les points de mesure représentant le repère.

5. Procédé selon la revendication 4, **caractérisé en ce que**, dans le but d'obtenir une position déterminée de manière unique pour chaque repère de forme différente, les repères de forme différente sur différentes rangées sont affectés d'un ordre différent et/ou de configurations différentes.

6. Procédé selon l'une quelconque des revendications précédentes, **caractérisé par** la détection, pour chaque repère, de son centre de gravité à utiliser comme un point représentant le repère mesuré.

7. Procédé selon la revendication 1, **caractérisé en ce que** les rangées parallèles de repères sont soit horizontales soit verticales.

8. Procédé selon l'une quelconque des revendications 1, 3 à 6, **caractérisé par** la détermination d'une rotation de l'outil en associant les informations se rapportant à au moins deux des rangées.

9. Dispositif de mesure sans contact ou sans touche de la position et/ou de l'orientation d'un outil ou d'accessoires au moyen de points d'image sur un moyen de formation de zone d'image (4, 5), lesdits points d'image sur ledit moyen de formation de zone d'image étant basés sur des repères prévus sur ledit outil et présentant des positions mutuelles prédéterminées, comprenant:
un moyen de traitement (30) conçu pour réaliser des calculs à partir desdits repères sur ledit outil, transformés en image sur ledit moyen de formation de zone d'image,
un moyen optique (41, 42 ; 51, 52) conçu pour transformer lesdits repères sur ledit outil en lesdits points d'image sur ledit moyen de formation de zone d'image ; et
ledit moyen de traitement (30) comprenant, en outre, un moyen conçu pour calculer une position et/ou une orientation réelles suivant au moins un axe dudit outil en utilisant lesdits points d'image,
chacun desdits repères comprenant au moins un point de mesure, et au moins un de ceux-ci pouvant être identifié ; chacun desdits repères étant un moyen d'indication de position et/ou d'orientation présentant une taille suffisamment importante et une forme telle que ledit moyen de traitement (30) peut les traiter dans le but de les restituer même si une partie desdits repères est masquée par certains objets opaques,
**caractérisé par**
au moins deux rangées desdits repères (8, 9 ; 13 à 16 ; 20 à 23 ; 26 à 28) prévus sur le même plan dudit outil, chacune desdites rangées comprenant au moins trois repères ; et dans lequel
lesdites au moins deux rangées de repères sont piacées sur le même plan dudit outil et sont parallèles.

10. Dispositif selon la revendication 9, **caractérisé en ce que** pour chacune de telles rangées, ledit moyen de traitement (30) comprend, en outre, un moyen conçu pour déterminer au moins une ligne dans un espace tridimensionnel passant par ladite rangée.

11. Dispositif selon la revendication 9 ou 10, **caractérisé en ce que**
Iedit moyen de traitement (30) comprend, en outre, un moyen conçu pour calculer une ligne à travers chaque rangée et/ou la position d'au moins un repère sur chaque rangée.

12. Dispositif selon la revendication 11, **caractérisé en ce que** lesdites rangées parallèles sont soit horizontales, soit verticales.

13. Dispositif selon la revendication 11, **caractérisé en ce que** lesdites rangées de repères s'étendent suivant une ligne passant d'une face d'extrémité de l'outil à l'autre.

14. Dispositif selon l'une quelconque des revendications 9 à 13, **caractérisé en ce que** ledit moyen de traitement (30) comprend, en outre, un moyen conçu pour réaliser des mesures consécutives desdits repères, chaque mesure conduisant au calcul d'au moins une ligne dans un espace tridimensionnel sur la sulface d'outil, et
le moyen de traitement (30) comprend, en outre, un moyen conçu pour calculer des déplacements de ladite ligne dans un espace tridimensionnel sur l'outil et ainsi, pour calculer au moins un type de déplacement de l'outil, tel qu'une translation, une rotation, etc..

15. Dispositif selon l'une quelconque des revendications 9 à 14, **caractérisé en ce que**:
la plupart des repères (8 ; 13 ; 20) sur l'outil présentent la même forme, et **en ce que**
au moins un repère (9 ; 14 à 16) est réalisé avec une forme différente de celle des autres, pouvant être facilement distinguée sur lesdites zones d'image,
chaque dit repère de forme différente présentant une position prédéterminée connue sur ledit outil et par rapport à une constellation prédéterminée des autres repères.

16. Dispositif selon la revendication 15, **caractérisé en ce que**, dans le but d'obtenir une position pouvant être déterminée de manière unique pour chaque repère de forme différente, lesdits repères de forme différente associés aux différentes rangées présentent un ordre différent et/ou des configurations différentes.

17. Dispositif selon l'une quelconque des revendications 9 à 16, **caractérisé en ce que** chaque repère prévu dans une rangée de repères utilisés pour la mesure est une partie d'un repère présentant une forme bidimensionnelle.

18. Dispositif selon l'une quelconque des revendications 9 à 16, **caractérisé en ce que** le moyen de traitement (30) comprend, en outre, un moyen destiné à détecter le centre de gravité d'un repère et comprend, en outre, un moyen destiné à l'utiliser comme l'un des points de mesure.

19. Dispositif selon l'une quelconque des revendications 9 à 18, **caractérisé en ce que** le moyen de traitement (30) comprend, en outre, un moyen destiné à calculer une translation de l'outil en détectant différentes positions spatiales du repère ou des repères de forme différente au cours des mesures réalisées de manière consécutive.

20. Dispositif selon l'une quelconque des revendications 9 à 19, **caractérisé en ce que** les repères (8, 9 ; 13 à 15 ; 20 à 23) sont réfléchissants et placés sur un fond mat, et comprenant, en outre, un moyen d'éclairage (6, 7) afin d'éclairer lesdits repères au moins au cours de l'acquisition d'image des zones de formation d'image (4, 5).
